# FASCICULE DE BREVET EUROPEEN

(11) **EP 1 827 978 B1**
(45) Date de publication et mention de la délivrance du brevet: **26.11.2008**
(21) Numéro de dépôt: 05825987.0
(22) Date de dépôt: 12.12.2005
(51) Int. Cl.: B64D 31/14, F02C 9/28

(54) **DISPOSITIF POUR ÉMETTRE UNE AUTORISATION D'AGIR SUR LE FONCTIONNEMENT D'UN MOTEUR D'AÉRONEF ET SYSTÈME DE CONTRÔLE DE MOTEUR COMPORTANT UN TEL DISPOSITIF**
VORRICHTUNG ZUR AUSGABE EINER GENEHMIGUNG ZUM EINWIRKEN AUF DIE BETRIEBSBEDINGUNGEN EINES LUFTFAHRZEUGMOTORS UND DIESE UMFASSENDES MOTORSTEUERSYSTEM
DEVICE FOR ISSUING AUTHORIZATION TO ACT ON THE OPERATING CONDITIONS OF AN AIRCRAFT ENGINE AND ENGINE CONTROL SYSTEM COMPRISING SAME

(30) Priorité: 20.12.2004 FR 0413553
(43) Date de publication de la demande: 05.09.2007
(73) Titulaire: AIRBUS France, 31060 Toulouse Cédex (FR)
(72) Inventeur: ZACCARIA, Patrick, F-31300 Toulouse (FR); FUERTES, Marie-Pierre, F-31500 Toulouse (FR)
(74) Mandataire: Hauer, Bernard
(86) Numéro de dépôt international: PCT/FR2005/003100
(87) Numéro de publication internationale: WO 2006/067295

(56) Documents cités:
- WO-A-20/04039672
- DE-A1- 4 119 334
- GB-A- 528 963
- US-A- 2 938 683
- US-A- 5 285 634

## Description

La présente invention concerne un dispositif pour émettre une autorisation d'agir sur le fonctionnement d'un moteur d'un aéronef et un système de contrôle d'au moins un moteur comportant un tel dispositif.

On sait qu'il existe des pannes du système propulsif d'un aéronef, notamment des pannes pour lesquelles la poussée d'au moins un moteur ne répond plus à la demande du pilote, qui peuvent avoir un impact direct et important sur la sécurité de l'aéronef. Pour pallier de telles pannes, on peut prévoir sur l'aéronef des dispositifs destinés à couper automatiquement le moteur en panne. Toutefois, une telle coupure n'est pas possible dans toutes les phases de vol et pour tous les états de l'aéronef.

Le document US 528,963 décrit toutes les caractéristiques du préambule de la revendication 1.

La présente invention a pour objet de remédier à ces inconvénients. Elle concerne un dispositif pour émettre un signal d'autorisation autorisant des moyens appropriés à agir sur le fonctionnement d'au moins un moteur d'un aéronef.

A cet effet, selon l'invention, ledit dispositif est remarquable en ce qu'il comporte :
- des premiers moyens pour déterminer des paramètres particuliers relatifs à l'aéronef, dont la position d'une manette des gaz contrôlant l'alimentation en carburant du moteur ; et
- des seconds moyens pour déterminer, à partir desdits paramètres particuliers, si l'aéronef se trouve dans un état autorisant une action sur le fonctionnement du moteur, et pour émettre, le cas échéant, un signal d'autorisation correspondant.

Ainsi, grâce à l'invention, des moyens appropriés précisés ci-dessous, qui sont susceptibles d'agir sur le fonctionnement d'un moteur (en coupant ce moteur ou en réduisant son débit par exemple), sont autorisés à agir sur ledit moteur uniquement si le dispositif conforme à l'invention a émis préalablement un signal d'autorisation correspondant, dépendant au moins de la position de la manette des gaz commandant ce moteur.

Par conséquent, grâce aux paramètres pris en compte conformément à l'invention et précisés ci-dessous, on peut prévoir que l'autorisation (en particulier de couper le moteur) n'est donnée par ledit dispositif que si des conditions appropriées, notamment toutes les conditions de sécurité requises, sont réunies. Pour cela, il suffit de prendre en compte des paramètres permettant de bien représenter ces conditions.

Dans un mode de réalisation préféré, lesdits seconds moyens émettent un signal d'autorisation, lorsque l'aéronef est au sol et le moteur au ralenti.

Dans ce cas, de façon avantageuse, lesdits seconds moyens déterminent que le moteur est au ralenti, lorsque au moins la position de la manette des gaz pour ledit moteur est inférieure ou égale à une position de ralenti. Pour consolider cette vérification, avantageusement, lesdits seconds moyens déterminent que ledit moteur est au ralenti, lorsque de plus la position d'une manette des gaz pour un autre moteur de l'aéronef est inférieure ou égale à une position prédéterminée.

En outre, avantageusement, lesdits seconds moyens déterminent que l'aéronef est au sol, lorsqu'au moins des spoilers sol sont sortis ou un train d'atterrissage principal de l'aéronef est comprimé. Pour consolider cette vérification, de façon avantageuse, lesdits seconds moyens déterminent que l'aéronef est au sol, lorsque de plus la hauteur de l'aéronef par rapport au sol est inférieure à une hauteur prédéterminée ou la vitesse des roues de l'aéronef est supérieure à une vitesse prédéterminée.

En outre, avantageusement, lesdits seconds moyens émettent également un signal d'autorisation, lorsqu'à la fois :
- la hauteur de l'aéronef par rapport au sol est inférieure à une hauteur prédéterminée ;
- le régime du moteur est supérieur à un régime prédéterminé ; et
- la position de la manette des gaz est inférieure ou égale à une position prédéterminée.

Par ailleurs, le dispositif conforme à l'invention comporte de plus :
- des troisièmes moyens pour déterminer si l'une des conditions suivantes est réalisée :
   a) un autre moteur de l'aéronef est en panne ;
   b) un autre moteur est coupé ;
   c) un signal d'autorisation est émis pour un autre moteur ; et

- des quatrièmes moyens pour inhiber l'émission d'un signal d'autorisation lorsque lesdits troisièmes moyens détectent la réalisation de l'une au moins desdites conditions a), b), et c).

La présente invention concerne également un système de contrôle d'au moins un moteur d'un aéronef, du type comportant au moins :
- une manette des gaz susceptible d'être activée par un pilote de l'aéronef, pour contrôler l'alimentation en carburant du moteur ; et
- un moyen de surveillance et de régulation du moteur, qui est susceptible d'agir sur le fonctionnement dudit moteur.

Selon l'invention, ledit système de contrôle comporte de plus au moins un dispositif tel que celui précité, pour émettre un signal d'autorisation, et ledit moyen de surveillance et de régulation est formé de manière à pouvoir agir sur le fonctionnement dudit moteur uniquement s'il a reçu préalablement un signal d'autorisation émis par ledit dispositif.

De préférence, ledit moyen de surveillance et de régulation est susceptible d'agir sur le fonctionnement du moteur, en modifiant le débit de carburant dudit moteur ou en coupant ledit moteur.

Dans un mode de réalisation particulier destiné au contrôle d'une pluralité de moteurs d'un aéronef, de façon avantageuse, ledit système de contrôle comporte une pluralité d'ensembles associés respectivement auxdits moteurs et comportant chacun une manette des gaz, un moyen de surveillance et de régulation, et un dispositif pour émettre un signal d'autorisation.

Les figures du dessin annexé feront bien comprendre comment l'invention peut être réalisée. Sur ces figures, des références identiques désignent des éléments semblables.

La figure 1 est le schéma synoptique d'un système de contrôle de moteur conforme à l'invention.

Les figures 2 à 4 illustrent schématiquement différentes fonctions mises en oeuvre pour un dispositif conforme à l'invention.

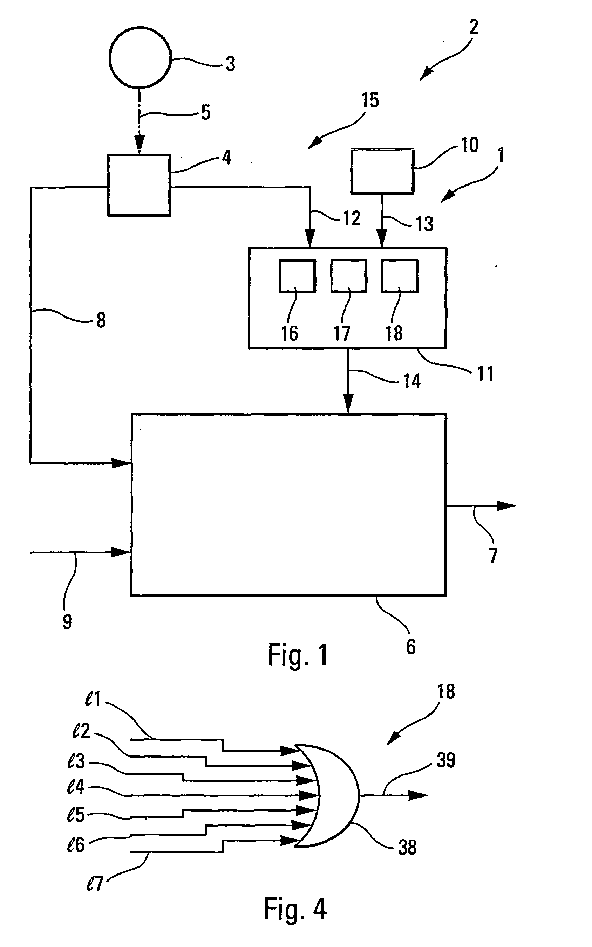

Le dispositif 1 conforme à l'invention est monté, comme illustré sur la figure 1, dans un système de contrôle 2 d'au moins un moteur (non représenté) d'un aéronef et est destiné à émettre un signal d'autorisation précisé ci-dessous.

Ledit système de contrôle 2 comporte, de façon usuelle, au moins un ensemble 15 comprenant :
- une manette des gaz 3 susceptible d'être actionnée par un pilote de l'aéronef, pour contrôler l'alimentation en carburant du moteur associé ;
- un moyen 4 pour déterminer la position de la manette des gaz 3, comme illustré par une liaison 5 en traits mixtes, et pour élaborer un signal représentatif de cette position ; et
- un moyen 6 de surveillance et de régulation du moteur, qui est susceptible d'agir sur le fonctionnement dudit moteur, par l'intermédiaire d'une liaison 7, en fonction du signal précité reçu dudit moyen 4 par l'intermédiaire d'une liaison 8 et d'autres paramètres (tels que la valeur du régime N1 du compresseur basse pression du moteur notamment) reçus par l'intermédiaire d'une liaison 9.

Ledit moyen 6 de surveillance et de régulation du moteur est formé pour agir sur le moteur, soit en le coupant, soit en réduisant le débit du carburant, et donc la puissance fournie par ledit moteur, lorsque ce dernier présente un problème pouvant avoir un impact direct sur la sécurité, notamment lors d'une panne TCM ("Trust Control Malfunction" en anglais, c'est-à-dire panne de la commande de poussée) pour laquelle la poussée du moteur ne répond plus à la demande du pilote.

Bien entendu, une telle action sur le moteur n'est pas possible dans toutes les phases de vol et pour tous les états de l'aéronef.

Aussi, selon l'invention, ledit moyen 6 de surveillance et de régulation est formé de manière à pouvoir agir sur le fonctionnement dudit moteur uniquement s'il a reçu préalablement un signal d'autorisation émis par ledit dispositif 1.

A cet effet, ledit dispositif 1 comporte selon l'invention :
- des moyens 4, 10 pour déterminer des paramètres particuliers relatifs à l'aéronef, dont la position de la manette des gaz 3 contrôlant l'alimentation en carburant du moteur contrôlé. Pour ce faire, ledit moyen 4 peut comporter un résolveur et un potentiomètre par exemple ; et
- des moyens 11 pour déterminer, à partir desdits paramètres particuliers reçus par l'intermédiaire de liaisons 12 et 13 desdits moyens 4 et 10, si l'aéronef se trouve dans un état autorisant une action sur le fonctionnement du moteur, et pour émettre, le cas échéant, un signal d'autorisation correspondant, qui est transmis par l'intermédiaire d'une liaison 14 audit moyen 6.

Par conséquent, grâce aux paramètres pris en compte par lesdits moyens 11 conformément à l'invention, qui seront précisés ci-dessous, on peut prévoir que l'autorisation (en particulier de couper le moteur) n'est donnée par le dispositif 1 que si des conditions appropriées, notamment des conditions de sécurité requises, sont réunies, en particulier en fonction de la phase de vol courante et de l'état courant (vitesse, configuration, ...) de l'aéronef. Pour ce faire, il suffit que le dispositif 1 prenne en compte des paramètres illustrant le mieux possible ces conditions.

Dans un mode de réalisation particulier :
- ledit moyen 6 de surveillance et de régulation du moteur est un système usuel de régulation électrique numérique à pleine autorité du moteur, de type FADEC ("Full-Authority Digital Engine Control" en anglais). On sait qu'un système de type FADEC possède deux canaux. Un canal actif qui gère la poussée et un canal dit passif qui permet de surveiller ledit canal actif et d'initier une coupure si nécessaire, c'est-à-dire si le moteur ne répond a la commande du pilote et que la poussée résultante engendre une situation non contrôlée de l'aéronef ; et/ou
- ledit moyen 11 est un calculateur primaire, de type PRIM, qui présente l'avantage d'être critique (niveau A) et de connaître la position de la manette des gaz 3 du moteur, ainsi que la phase de vol (avec des caractéristiques telles que l'altitude, la vitesse de l'aéronef ou celle des roues).

Dans un mode de réalisation particulier, lesdits moyens 11 activent, par l'intermédiaire de la liaison 14, un relais pour fermer un circuit vers les canaux du système FADEC que ce dernier interprète comme une autorisation d'agir (notamment une autorisation de coupure) si une panne de type TCM précité est détectée.

Par ailleurs, dans un mode de réalisation particulier destiné au contrôle d'une pluralité de moteurs d'un aéronef, en particulier d'un avion de transport, ledit système de contrôle 2 comporte une pluralité d'ensembles 15 dont chacun est associé à l'un desdits moteurs et comporte à chaque fois, comme indiqué précédemment, notamment une manette des gaz 3, un moyen 6 de surveillance et de régulation, et un dispositif 1 pour émettre un signal d'autorisation.

Lesdits moyens 11 comportent différentes fonctions qui peuvent être mises en oeuvre notamment en fonction de la phase de vol de l'aéronef. On précisera ci-après certaines 16, 17, 18 de ces fonctions.

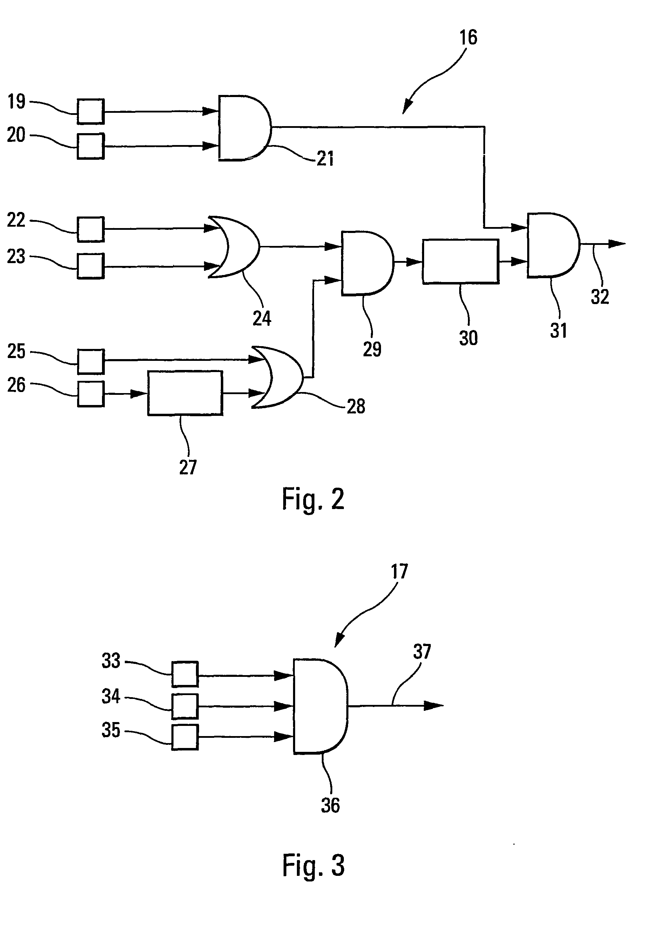

La fonction 16 représentée schématiquement sur la figure 2 est appliquée au cas où l'aéronef est au sol.

Cette fonction 16 comporte :
- un moyen 19 pour déterminer si la position de la manette des gaz 3 dudit moteur est inférieure ou égale à une position de ralenti, c'est-à-dire si cette position commande un débit de carburant qui est inférieur ou égal à celui commandé pour ladite position de ralenti ;
- un moyen 20 pour déterminer si la position d'une autre manette des gaz de l'aéronef, c'est-à-dire d'une manette des gaz commandant un autre moteur de l'aéronef que celui considéré actuellement, est inférieure ou égale à une position prédéterminée ;
- une porte logique ET 21 qui est reliée auxdits moyens 19 et 20 ;
- un moyen 22 pour déterminer si des spoilers sol de l'aéronef sont sortis ;
- un moyen 23 pour déterminer si un train d'atterrissage principal de l'aéronef est comprimé, c'est-à-dire si ce dernier touche le sol ;
- une porte logique OU 24 qui est reliée auxdits moyens 22 et 23 ;
- un moyen 25 pour déterminer si la vitesse des roues de l'aéronef est supérieure à une vitesse prédéterminée ;
- un moyen 26 pour déterminer si la hauteur de l'aéronef par rapport au sol (reçue par un radioaltimètre) est supérieure à une hauteur prédéterminée ;
- un moyen 27 pour vérifier et indiquer le cas échéant que la hauteur de l'aéronef par rapport au sol est supérieure à ladite hauteur prédéterminée, depuis au moins une durée prédéterminée ;
- une porte logique OU 28 reliée auxdits moyens 25 et 27 ;
- une porte logique ET 29 reliée auxdites portes logiques OU 24 et 28 ;
- un moyen 30 pour vérifier et indiquer le cas échéant que le résultat reçu de ladite porte logique ET 29 est vrai depuis au moins une durée prédéterminée ; et
- une porte logique ET 31 qui est reliée à la porte logique ET 21 et au moyen 30 et qui est susceptible d'émettre le cas échéant un signal d'autorisation par l'intermédiaire d'une liaison 32 reliée à la liaison 14.

Par conséquent, ladite fonction 1 6 desdits moyens 11 émet un signal d'autorisation, lorsque :
- le moteur est au ralenti, c'est-à-dire lorsque :
   ■ la position de la manette des gaz 3 dudit moteur est inférieure ou égale à une position de ralenti (moyen 19) ; et (porte 21)
   ■ la position d'une manette des gaz d'un autre moteur de l'aéronef est inférieure ou égale à une position prédéterminée (moyen 20) ; et (porte 31)
- l'aéronef est au sol, c'est-à-dire lorsque :
   ■ des spoilers sol sont sortis (moyen 22) ou (porte 24) un train d'atterrissage principal de l'aéronef est comprimé (moyen 23) ; et (porte29)
   ■ la vitesse des roues de l'aéronef est supérieure à une vitesse prédéterminée (moyen 25) ou (porte 28), la hauteur de l'aéronef par rapport au sol est inférieure à une hauteur prédéterminée (moyen 26).

Par ailleurs, la fonction 17 qui est représentée schématiquement sur la figure 3, est appliquée au cas où l'aéronef se trouve dans une phase de vol à proximité du sol (dite "flare" en anglais ou "arrondi" en français), relative à une phase de transition entre l'altitude d'approche et l'altitude d'atterrissage.

Cette fonction 17 comporte :
- un moyen 33 pour déterminer si la hauteur de l'aéronef par rapport au sol (reçue par un radioaltimètre) est inférieure à une hauteur prédéterminée ;
- un moyen 34 pour déterminer si le régime du moteur est supérieur à un régime prédéterminé ;
- un moyen 35 pour déterminer si la position de la manette des gaz 3 est inférieure ou égale à une position prédéterminée ; et
- une porte logique ET 36 qui est reliée auxdits moyens 33, 34 et 35 et qui est susceptible d'émettre un signal d'autorisation par l'intermédiaire d'une liaison 37 reliée à la liaison 14.

Par conséquent, ladite fonction 17 émet un signal d'autorisation, lorsqu'à la fois (porte 36) :
- la hauteur de l'aéronef par rapport au sol est inférieure à une hauteur prédéterminée (moyen 33) ;
- le régime du moteur est supérieur à un régime prédéterminé (moyen 34) ; et
- la position de la manette des gaz 3 est inférieure ou égale à une position prédéterminée (moyen 35).

Par ailleurs, la fonction 18 représentée sur la figure 4 permet d'inhiber l'émission d'un signal d'autorisation et donc empêcher que le dispositif 1 émette un tel signal ou bien annuler un tel signal préalablement émis par ledit dispositif 1.

Plus précisément, ladite fonction 18 inhibe l'émission d'un signal d'autorisation par l'intermédiaire d'une liaison 39, lorsque l'une des conditions suivantes a), b) et c) est réalisée :
a) au moins un autre moteur de l'aéronef est en panne (les différentes informations sur les autres moteurs sont respectivement reçues par l'intermédiaire de liaisons ℓ1, ℓ2 et ℓ3) ; ou (porte logique OU 38)
b) au moins un autre moteur de l'aéronef a été coupé (informations reçues par des liaisons ℓ4, ℓ5 et ℓ6) ; ou (porte 38) ;
c) un signai d'autorisation est ou a été émis par un dispositif 1 pour un autre moteur (information reçue par une liaison ℓ7).

## Revendications

1. Dispositif pour émettre un signal d'autorisation correspondant à une autorisation d'agir sur le fonctionnement d'au moins un moteur d'un aéronef, ledit dispositif comportant :
- des premiers moyens (4, 10) pour déterminer des paramètres particuliers relatifs à l'aéronef, dont la position d'une manette des gaz (3) contrôlant l'alimentation en carburant du moteur ; et
- des seconds moyens (11) pour déterminer, à partir desdits paramètres particuliers, si l'aéronef se trouve dans un état autorisant une action sur le fonctionnement du moteur, et pour émettre, le cas échéant, un signal d'autorisation correspondant,
**caractérisé en ce qu'**il comporte de plus :
- des troisièmes moyens (10) pour déterminer si les conditions suivantes sont réalisées :
a) un autre moteur de l'aéronef est en panne ;
b) un autre moteur est coupé ; et
c) un signal d'autorisation est émis pour un autre moteur ; et
- des quatrièmes moyens (11) pour inhiber l'émission d'un signal d'autorisation, lorsque lesdits troisièmes moyens (10) détectent la réalisation de l'une au moins desdites conditions a), b) et c).

2. Dispositif selon la revendication 1,
**caractérisé en ce que en ce que** lesdits seconds moyens (11) émettent un signal d'autorisation, lorsque l'aéronef est au sol et le moteur au ralenti.

3. Dispositif selon la revendication 2,
**caractérisé en ce que** lesdits seconds moyens (11) déterminent que le moteur est au ralenti, lorsqu'au moins la position de la manette des gaz (3) pour ledit moteur est inférieure ou égale à une position de ralenti.

4. Dispositif selon la revendication 3,
**caractérisé en ce que** lesdits seconds moyens (11) déterminent que le moteur est au ralenti, lorsque de plus la position d'une manette des gaz pour un autre moteur de l'aéronef est inférieure ou égale à une position prédéterminée.

5. Dispositif selon l'une quelconque des revendications 2 à 4,
**caractérisé en ce que** lesdits seconds moyens (11) déterminent que l'aéronef est au sol, lorsqu'au moins des spoilers sol sont sortis ou un train d'atterrissage principal de l'aéronef est comprimé.

6. Dispositif selon la revendication 5,
**caractérisé en ce que** lesdits seconds moyens (11) déterminent que l'aéronef est au sol, lorsque de plus la hauteur de l'aéronef par rapport au sol est inférieure à une hauteur prédéterminée ou la vitesse des roues de l'aéronef est supérieure à une vitesse prédéterminée.

7. Dispositif selon l'une quelconque des revendications précédentes,
**caractérisé en ce que** lesdits seconds moyens (11) émettent un signal d'autorisation, lorsqu'à la fois :
- la hauteur de l'aéronef par rapport au sol est inférieure à une hauteur prédéterminée ;
- le régime du moteur est supérieur à un régime prédéterminé ; et
- la position de la manette des gaz (3) est inférieure ou égale à une position prédéterminée.

8. Système de contrôle d'au moins un moteur d'un aéronef, ledit système de contrôle (2) comportant au moins :
- une manette des gaz (3) susceptible d'être actionnée par un pilote de l'aéronef, pour contrôler l'alimentation en carburant du moteur ; et
- un moyen (6) de surveillance et de régulation du moteur, qui est susceptible d'agir sur le fonctionnement dudit moteur,
**caractérisé en ce qu'**il comporte de plus au moins un dispositif (1) tel que celui spécifié dans l'une quelconque des revendications 1 à 7, pour émettre un signal d'autorisation, et **en ce que** ledit moyen (6) de surveillance et de régulation est formé de manière à pouvoir agir sur le fonctionnement dudit moteur uniquement s'il a reçu préalablement d'un signal d'autorisation émis par ledit dispositif (1).

9. Système de contrôle selon la revendication 8,
**caractérisé en ce que** ledit moyen (6) de surveillance et de régulation est susceptible d'agir sur le fonctionnement du moteur, en modifiant le débit de carburant dudit moteur ou en coupant ledit moteur.

10. Système de contrôle selon l'une des revendications 8 et 9, pour contrôler une pluralité de moteurs de l'aéronef,
**caractérisé en ce qu'**il comporte une pluralité d'ensembles (15) associés respectivement auxdits moteurs et comportant chacun une manette des gaz (3), un moyen (6) de surveillance et de régulation, et un dispositif (1) pour émettre un signal d'autorisation.

11. Aéronef
**caractérisé en ce qu'**il comporte au moins un système de contrôle (2) tel que celui spécifié dans l'une quelconque des revendications 8 à 10, pour contrôler au moins un moteur dudit aéronef.

## Claims

1. A device for issuing an authorization signal corresponding to an authorization to act on the operating conditions of at least one engine of an aircraft, said device comprising:
- first means (4, 10) for determining particular parameters relating to the aircraft, including the position of a throttle lever (3) controlling the fuel supply to the engine; and
- second means (11) for determining, on the basis of said particular parameters, whether the aircraft is in a state authorizing an action on the operating conditions of the engine, and for issuing, as appropriate, a corresponding authorization signal,
**characterized in that** it furthermore comprises:
- third means (10) for determining whether the following conditions are realized:
a) another engine of the aircraft is faulty;
b) another engine is cut off; and
c) an authorization signal is issued for another engine; and
- fourth means (11) for disabling the issuing of an authorization signal, when said third means (10) detect the realization of one at least of said conditions a), b) and c).

2. The device as claimed in claim 1,
**characterized in that** said second means (11) issue an authorization signal, when the aircraft is on the ground and the engine is idling.

3. The device as claimed in claim 2,
**characterized in that** said second means (11) determine that the engine is idling, when at least the position of the throttle lever (3) for said engine is below or equal to an idling position.

4. The device as claimed in claim 3,
**characterized in that** said second means (11) determine that the engine is idling, when moreover the position of a throttle lever for another engine of the aircraft is below or equal to a predetermined position.

5. The device as claimed in any one of claims 2 to 4,
**characterized in that** said second means (11) determine that the aircraft is on the ground, when at least ground spoilers are extended or a main landing gear of the aircraft is compressed.

6. The device as claimed in claim 5,
**characterized in that** said second means (11) determine that the aircraft is on the ground, when moreover the height of the aircraft with respect to the ground is below a predetermined height or the speed of the wheels of the aircraft is above a predetermined speed.

7. The device as claimed in any one of the preceding claims, **characterized in that** said second means (11) issue an authorization signal, when at one and the same time:
- the height of the aircraft with respect to the ground is below a predetermined height;
- the output of the engine is above a predetermined output; and
- the position of the throttle lever (3) is below or equal to a predetermined position.

8. A system for controlling at least one engine of an aircraft, said control system (2) comprising at least:
- a throttle lever (3) able to be actuated by a pilot of the aircraft, to control the fuel supply to the engine; and
- a means (6) of monitoring and of regulating the engine, which is able to act on the operating conditions of said engine,
**characterized in that** it furthermore comprises at least one device (1) such as that specified in any one of claims 1 to 7, for issuing an authorization signal, and **in that** said monitoring and regulating means (6) is formed in such a way as to be able to act on the operating conditions of said engine only if it has previously received of an authorization signal issued by said device (1).

9. The control system as claimed in claim 8,
**characterized in that** said monitoring and regulating means (6) is able to act on the operating conditions of the engine, by modifying the flow rate of fuel of said engine or by cutting off said engine.

10. The control system as claimed in one of claims 8 and 9, for controlling a plurality of engines of the aircraft,
**characterized in that** it comprises a plurality of assemblies (15) associated respectively with said engines and each comprising a throttle lever (3), a monitoring and regulating means (6), a device (1) for issuing an authorization signal.

11. An aircraft
**characterized in that** it comprises at least one control system (2) such as that specified in any one of claims 8 to 10, for controlling at least one engine of said aircraft.

## Patentansprüche

1. Vorrichtung zur Ausgabe eines Genehmigungssignals, das einer Genehmigung zum Einwirken auf die Betriebsbedingungen mindestens eines Luftfahrzeugmotors entspricht, wobei die Einrichtung Folgendes umfasst:
- erste Mittel (4, 10) zum Bestimmen besonderer Flugzeugparameter, einschließlich der Position eines Gashebels (3), der die Treibstoffzufuhr des Motors steuert und
- zweite Mittel (11), um aus diesen besonderen Parametern zu bestimmen, ob das Flugzeug sich in einem Zustand befindet, der ein Einwirken auf die Betriebsbedingungen des Motors zulässt und um gegebenenfalls ein entsprechendes Genehmigungssignal auszugeben, **dadurch gekennzeichnet, dass** sie zusätzlich Folgendes umfasst:
- dritte Mittel (10), um zu bestimmen, ob die folgenden Bedingungen erfüllt sind:
a) ein weiterer Motor des Flugzeugs ist fehlerhaft
b) ein weiterer Motor ist abgeschaltet und
c) für einen weiteren Motor ist ein Genehmigungssignal gesendet worden und
- vierte Mittel (11), um das Versenden eines Genehmigungssignals zu verhindern, wenn die dritten Mittel (10) die Erfüllung mindestens einer der Bedingungen a), b) und c) erkennen.

2. Vorrichtung nach Anspruch 1,
**dadurch gekennzeichnet, dass** die zweiten Mittel (11) ein Genehmigungssignal ausgeben, wenn das Flugzeug am Boden und der Motor im Leerlauf ist.

3. Vorrichtung nach Anspruch 2,
**dadurch gekennzeichnet, dass** die zweiten Mittel (11) bestimmen, dass der Motor im Leerlauf ist, wenn zumindest die Stellung des Gashebels (3) für den Motor kleiner oder gleich einer Leerlaufstellung ist.

4. Vorrichtung nach Anspruch 3,
**dadurch gekennzeichnet, dass** die zweiten Mittel (11) bestimmen, dass der Motor im Leerlauf ist, wenn zusätzlich die Stellung eines Gashebels für einen weiteren Motor des Flugzeugs kleiner oder gleich einer vorgegebenen Stellung ist.

5. Vorrichtung nach einem der Ansprüche 2 bis 4,
**dadurch gekennzeichnet, dass** die zweiten Mittel (11) bestimmen, dass das Flugzeug am Boden ist, wenn zumindest die Störklappen ausgefahren sind oder ein Hauptlandefahrwerk des Flugzeugs zusammengedrückt ist.

6. Vorrichtung nach Anspruch 5,
**dadurch gekennzeichnet, dass** die zweiten Mittel (11) bestimmen, dass das Flugzeug am Boden ist, wenn zusätzlich die Höhe des Flugzeugs bezogen auf den Boden kleiner als eine vorgegebene Höhe ist, oder die Geschwindigkeit der Räder des Flugzeugs größer als eine vorgegebene Geschwindigkeit ist.

7. Vorrichtung nach einem der vorhergehenden Ansprüche,
**dadurch gekennzeichnet, dass** die zweiten Mittel (11) ein Genehmigungssignal ausgeben, wenn gleichzeitig:
- die Höhe des Flugzeugs bezogen auf den Boden kleiner als eine vorgegebene Höhe ist,
- die Motordrehzahl größer als eine vorgegebene Drehzahl ist und
- die Stellung des Gashebels (3) kleiner oder gleich einer vorgegebenen Stellung ist.

8. System zum Steuern mindestens eines Luftfahrzeugmotors, wobei das Steuersystem (2) mindestens Folgendes umfasst:
- einen Gashebel (3), der von einem Piloten des Flugzeugs zum Steuern der Treibstoffzufuhr des Motors betätigbar ist und
- ein Mittel (6) zur Überwachung und Regelung des Motors, das geeignet ist, auf die Betriebsbedingungen des Motors einzuwirken,
**dadurch gekennzeichnet, dass** es zusätzlich mindestens eine Vorrichtung (1) wie die in einem der Ansprüche 1 bis 7 spezifizierte zum Ausgeben eines Genehmigungssignals umfasst und **dadurch**, dass das Überwachungs- und Regelungsmittel (6) derart ausgebildet ist, dass es auf die Betriebsbedingungen des Motors ausschließlich dann einwirken kann, wenn es zuvor ein von der Einrichtung (1) ausgegebenes Genehmigungssignal empfangen hat.

9. Steuersystem nach Anspruch 8,
**dadurch gekennzeichnet, dass** das Überwachungs- und Regelungsmittel (6) auf die Betriebsbedingungen des Motor einwirken kann, indem es den Treibstoffdurchsatz des Motors verändert oder den Motor ausschaltet.

10. Steuersystem nach Anspruch 8 oder 9
zum Steuern einer Vielzahl von Motoren des Flugzeugs,
**dadurch gekennzeichnet, dass** es eine Vielzahl von Anordnungen (15) umfasst, die jeweils den Motoren zugeordnet sind und die jeweils einen Gashebel (3), ein Überwachungs- und Regelungsmittel (6) und eine Vorrichtung (1) zur Ausgabe eines Genehmigungssignals umfassen.

11. Flugzeug,
**dadurch gekennzeichnet, dass** es mindestens ein Steuersystem (2) wie das in einem der Ansprüche 8 bis 10 spezifizierte zum Steuern mindestens eines Motors des Flugzeugs umfasst.
